# EUROPEAN PATENT APPLICATION

(11) **EP 4 840 630 A1**
(43) Date of publication of application: **18.11.2026**
(21) Application number: 25767328.5
(22) Date of filing: 04.03.2025
(51) Int. Cl.: B32B 17/10, B32B 38/00, C03C 23/00, B60J 1/00, B60R 21/34

(54) **VEHICLE WINDOW GLASS, MANUFACTURING METHOD THEREFOR, AND VEHICLE**

(30) Priority: 05.03.2024 CN 202410249686
(71) Applicant: Fuyao Glass Industry Group Co., Ltd., Fuzhou, Fujian 350300 (CN)
(72) Inventor: CHI, Kezhang, Fuzhou, Fujian 350300 (CN); CHEN, Hexing, Fuzhou, Fujian 350300 (CN); CHEN, Bizhu, Fuzhou, Fujian 350300 (CN); SONG, Guoshan, Fuzhou, Fujian 350300 (CN); ZHOU, Yao, Fuzhou, Fujian 350300 (CN); CHEN, Jingfeng, Fuzhou, Fujian 350300 (CN); WU, Jiawen, Fuzhou, Fujian 350300 (CN); XIAO, Qinghui, Fuzhou, Fujian 350300 (CN)
(74) Representative: Gill Jennings & Every LLP
(86) International application number: PCT/CN2025/080366
(87) International publication number: WO 2025/185590

(57) **Abstract**

The present application relates to vehicle window glass, a manufacturing method therefor, and a vehicle. The vehicle window glass includes laminated glass (10). In a direction from the exterior to the interior of the vehicle, the laminated glass (10) sequentially includes a first glass sheet (11), an interlayer (20), and a second glass sheet (12). The interlayer layer (20) is connected between the first glass sheet (11) and the second glass sheet (12). The first glass sheet (11) and the second glass sheet (12) each have an outer surface facing the outside of the vehicle and an inner surface opposite to the outer surface. The laminated glass (10) includes a weakened region (103), the weakened region (103) includes a plurality of modified portions (13), and the first glass sheet (11) and/or the second glass sheet (12) undergo laser treatment to form the plurality of modified portions (13) arranged at intervals.

## Description

### CROSS-REFERENCE TO RELATED APPLICATIONS

This application claims priority to Chinese patent application No. 202410249686.1, entitled "VEHICLE WINDOW GLASS, MANUFACTURING METHOD THEREFOR, AND VEHICLE" filed on March 5, 2024, the content of which is hereby incorporated by reference in its entirety.

### TECHNICAL FIELD

The present application relates to the technical field of glass, and in particular to a vehicle window glass, a manufacturing method thereof, and a vehicle.

### BACKGROUND

With the continuous development of the global economy, the number of automobiles has also been continuously increasing, and the resulting automobile safety issues have become particularly prominent. In particular, for vulnerable groups among road users such as pedestrians and cyclists, they are more susceptible to injuries when colliding with vehicles in traffic accidents. Various countries have begun to implement laws and regulations regarding pedestrian head protection, and have added strengthened requirements for head protection as well as restrictions for leg protection. Regarding collisions between vehicles and pedestrians, the head is the most common body part that suffers fatal injuries. In China, a test method has been established to quantify head injuries, namely, assuming a collision between a pedestrian's head and a windshield or the like. A dummy simulating an adult head (i.e., a head impactor) is launched from a test machine toward a target object, the impact received by the head impactor is measured, and evaluated as a head injury criterion (HIC) value. When a pedestrian has a frontal collision with a vehicle, lower limbs of the pedestrian first contact the bumper of vehicle, which then causes the upper body of the pedestrian to rotate, and finally the pedestrian's head impacts the hood or the windshield. Studies have shown that although secondary ground impact can also cause injuries, the most severe injuries are still caused by the primary impact between the pedestrian and the vehicle. In order to reduce head injuries during collisions between pedestrians and vehicles, ENCAP, CNCAP, and others have all defined the HIC₁₅ value for a five-star collision to be less than 650.

In the related art, methods for producing front windshields of vehicles mainly include gravity forming and single-sheet press forming. Among them, single-sheet press forming is widely used due to its advantages such as good surface transition, low variation, fast production frequency, and low cost. Its forming process steps include: heating and softening a single-piece glass sheet in a heating furnace through transmission by ceramic rollers, then advancing to a forming section, then pressing the single-piece glass sheet into shape through counter-pressing of an upper male die and a lower female die, and finally placing the individually pressed single-piece glass sheets together and sending them to a lamination process for lamination treatment. However, due to reasons such as the large output, fast production frequency, and short annealing time of single-sheet press forming, the surface stress of the glass is high, and the glass strength is high, leading to unsatisfactory cushioning effect during collision with pedestrians, with a HIC value typically greater than 1000, thus failing to meet safety index requirements.

### SUMMARY

According to various embodiments of the present application, the present application provides a vehicle window glass, a manufacturing method thereof, and a vehicle.

The present application provides a vehicle window glass, including a laminated glass, wherein in a direction from an outside of a vehicle to an inside of the vehicle, the laminated glass sequentially includes a first glass sheet, an interlayer, and a second glass sheet, the interlayer is connected between the first glass sheet and the second glass sheet, and the first glass sheet and the second glass sheet each have an outer surface facing the outside of the vehicle and an inner surface opposite to the outer surface; the laminated glass includes a weakened region, the weakened region includes a plurality of modified portions, and the first glass sheet and/or the second glass sheet are formed with a plurality of the modified portions arranged at intervals after a laser treatment.

In one embodiment, the first glass sheet includes a first surface and a second surface disposed opposite to each other, the second glass sheet includes a third surface and a fourth surface disposed opposite to each other, and the interlayer is connected to the second surface and the third surface, the first surface is the outer surface of the first glass sheet facing the outside of the vehicle, the second surface is the inner surface of the first glass sheet facing the inside of the vehicle, the third surface is the outer surface of the second glass sheet facing the outside of the vehicle, and the fourth surface is the inner surface of the second glass sheet facing the inside of the vehicle; the modified portion extends from the first surface of the first glass sheet toward the second surface of the first glass sheet, and/or the modified portion extends from the third surface of the second glass sheet toward the fourth surface of the second glass sheet.

In one embodiment, in a thickness direction of the laminated glass, a depth of the modified portion is set as H1, and a thickness of the first glass sheet or the second glass sheet is set as H2, where 0.2H2 ≤ H1 < H2.

In one embodiment, the modified portions are located at the first surface of the first glass sheet, and/or the modified portions are located at the third surface of the second glass sheet.

In one embodiment, the modified portions are located inside the first glass sheet and/or the second glass sheet; a distance between the modified portion inside the first glass sheet and the outer surface of the first glass sheet or a distance between the modified portion inside the second glass sheet and the outer surface of the second glass sheet is set as H3, and a thickness of the first glass sheet or the second glass sheet is set as H2, where 0.2H2 ≤ H3 < 0.5H2.

In one embodiment, in a width direction of the laminated glass, a distance between two farthest points of a pattern outline formed by the modified portion on the outer surface of the first glass sheet and/or the outer surface of the second glass sheet is set as D, where D ≤ 0.5 mm.

In one embodiment, in a width direction of the laminated glass, a distance between two modified portions adjacent to each other on the outer surface of the first glass sheet and/or the outer surface of the second glass sheet is set as d, where 20 mm ≤ d ≤ 300 mm.

In one embodiment, the first glass sheet and the second glass sheet both include a plurality of the modified portions arranged at intervals, and the modified portions of the first glass sheet and the modified portions of the second glass sheet are offset from each other in a thickness direction of the laminated glass.

In one embodiment, the first glass sheet and the second glass sheet both include a plurality of the modified portions arranged at intervals, and the modified portions of the first glass sheet and the modified portions of the second glass sheet overlap with each other in a thickness direction of the laminated glass.

In one embodiment, the first glass sheet and the second glass sheet both include a plurality of the modified portions arranged at intervals; the modified portions of the first glass sheet are located inside the first glass sheet, and the modified portions of the second glass sheet are located at the outer surface of the second glass sheet.

In one embodiment, the modified portions are formed only at the third surface of the second glass sheet, or the modified portions are formed only inside the second glass sheet.

In one embodiment, the vehicle window glass includes a light-transmitting region and a light-shielding region arranged along a circumferential direction of the light-transmitting region, a visible light transmittance of the light-transmitting region is greater than or equal to 70%, and a visible light transmittance of the light-shielding region is less than or equal to 5%; and the light-transmitting region includes the weakened region.

In one embodiment, a distance between an outline of the light-shielding region and an outline of the weakened region is set as S, where 30 mm ≤ S ≤ 200 mm.

In one embodiment, a head injury criterion (HIC) value of the weakened region is less than 650.

In one embodiment, the head injury criterion (HIC) value of the weakened region is less than or equal to 300, or the head injury criterion (HIC) value of the weakened region is in a range from 150 to 300.

In one embodiment, a plurality of the modified portions arranged at intervals are formed at both the inner surface of the first glass sheet and/or the inner surface of the second glass sheet after laser treatment.

In one embodiment, a plurality of the modified portions arranged at intervals are formed at both the outer surface and the inner surface of the first glass sheet, and the modified portions at the outer surface of the first glass sheet and the modified portions at the inner surface of the first glass sheet are offset from each other in a thickness direction of the first glass sheet; and/or
a plurality of the modified portions arranged at intervals are formed at both the outer surface and the inner surface of the second glass sheet, and the modified portions at the outer surface of the second glass sheet and the modified portions at the inner surface of the second glass sheet are offset from each other in a thickness direction of the second glass sheet.

The present application also provides a method for manufacturing the vehicle window glass according to any one of the above embodiments, including the following steps:
step 1, focusing a laser on the first glass sheet and/or the second glass sheet to perform a modification treatment on the first glass sheet and/or the second glass sheet to obtain a plurality of modified portions; and
step 2, performing a laminating treatment on the first glass sheet, the second glass sheet, and the interlayer.

In one embodiment, step 1 includes: placing the first glass sheet and/or the second glass sheet to be modified on a platform, with a laser device located above the first glass sheet and/or the second glass sheet, and
focusing the laser emitted by the laser device on the first glass sheet and/or the second glass sheet by using a galvanometer scanner and a field lens to form a plurality of the modified portions in the first glass sheet and/or the second glass sheet.

The present application also provides a vehicle including the vehicle window glass according to any one of the above embodiments.

Details of one or more embodiments of the present application are set forth in the following drawings and description. Other features, objects, and advantages of the present application will become apparent from the description, drawings, and claims.

### BRIEF DESCRIPTION OF THE DRAWINGS

FIG. 1 is a schematic structural view of a vehicle window glass according to an embodiment of the present application.
FIG. 2 is a cross-sectional schematic structural view of a laminated glass according to an embodiment of the present application.
FIG. 3 is a cross-sectional schematic structural view of a laminated glass according to another embodiment of the present application.
FIG. 4 is a cross-sectional schematic structural view of a laminated glass according to yet another embodiment of the present application.
FIG. 5 is a schematic view illustrating a state where a laser device performs a modification treatment on the laminated glass according to an embodiment of the present application.
FIG. 6 is an exploded schematic structural view of the laminated glass after the modification treatment according to an embodiment of the present application.
FIG. 7 is a schematic structural view under a microscope of a cross section of the modified laminated glass after sectioning according to an embodiment of the present application.

1, vehicle window glass; 10, laminated glass; 101, light-transmitting region; 102, light-shielding region; 103, weakened region; 11, first glass sheet; 111, first surface; 112, second surface; 12, second glass sheet; 121, third surface; 122, fourth surface; 13, modified portion; 131, first modified portion; 132, second modified portion; 20, interlayer; 30, laser device.

### DETAILED DESCRIPTION

In order to make the above objects, features and advantages of the present application more comprehensible, specific embodiments of the present application are described in detail below with reference to the drawings. In the following description, many specific details are set forth to make the present application fully understandable. However, the present application can be implemented in many other ways different from those described herein. Similar improvements can be made by those skilled in the art without departing from the spirit of the present application. The present application is not limited to the specific embodiments disclosed below.

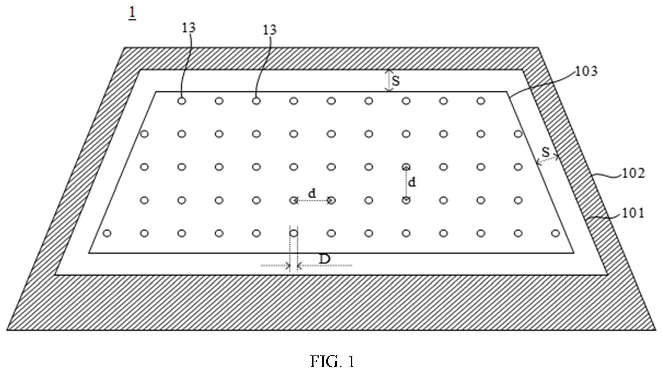

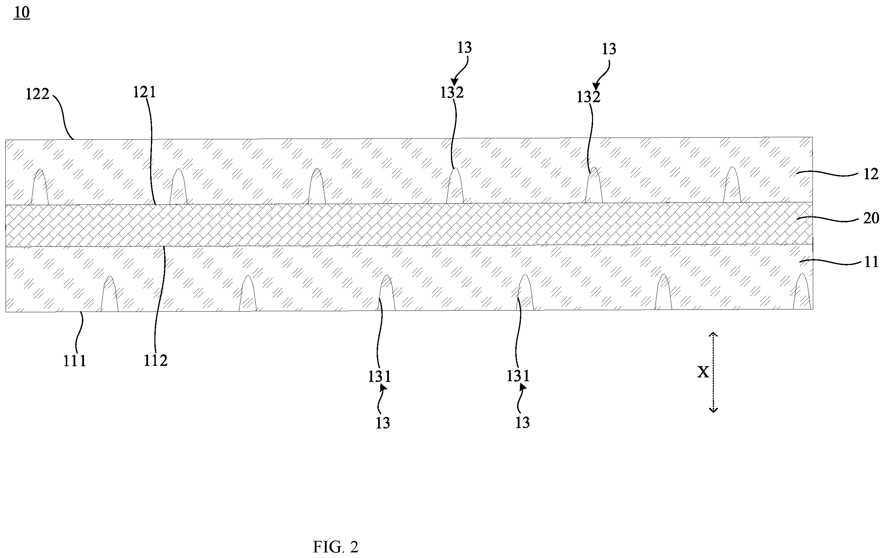

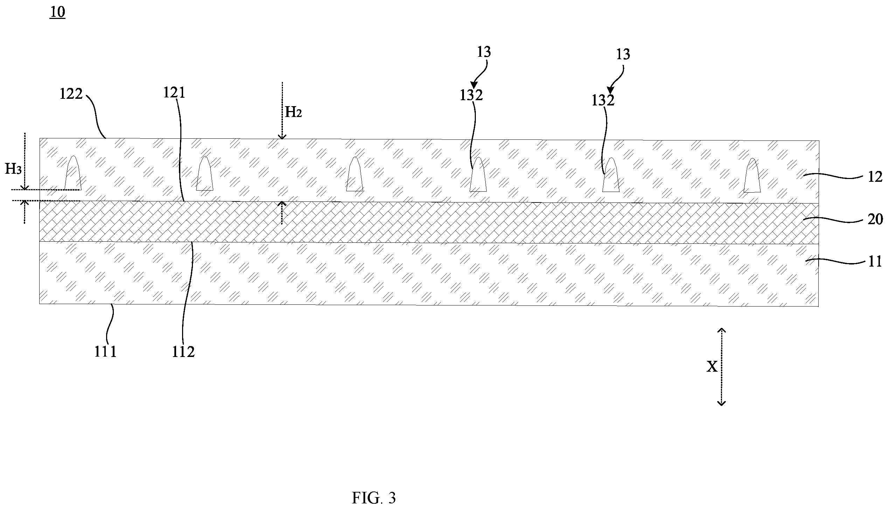

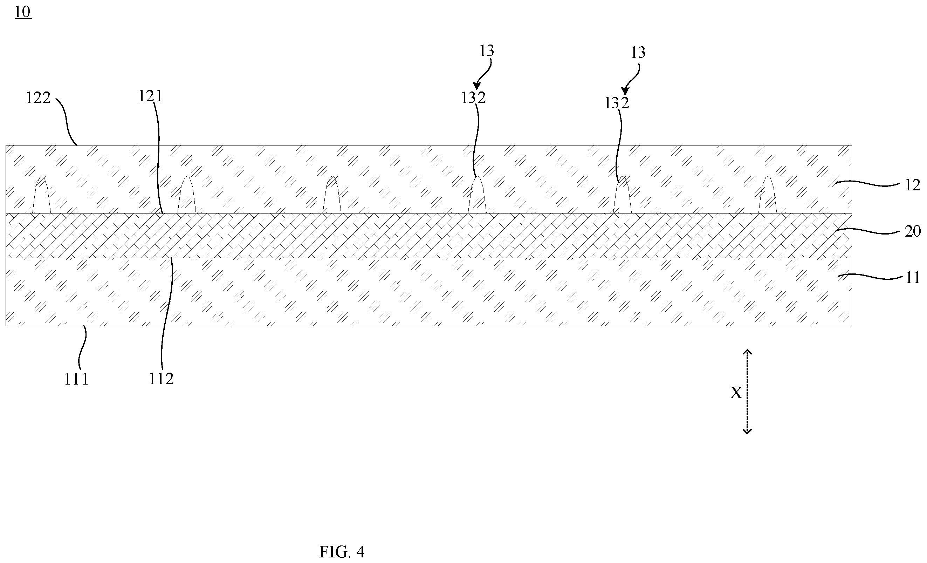

Referring to FIG. 1 to FIG. 3, FIG. 1 shows a schematic structural view of a vehicle window glass according to an embodiment of the present application. FIG. 2 and FIG. 3 respectively show cross-sectional schematic structural views of a laminated glass according to two different embodiments of the present application. A vehicle window glass is provided by an embodiment of the present application, and the vehicle window glass 1 includes a laminated glass 10. In a direction from an outside of a vehicle to an inside of the vehicle, the laminated glass 10 sequentially includes a first glass sheet 11, an interlayer 20, and a second glass sheet 12. The interlayer 20 is connected between the first glass sheet 11 and the second glass sheet 12, and the first glass sheet 11 and the second glass sheet 12 each have an outer surface facing the outside of the vehicle and an inner surface opposite to the outer surface. The laminated glass includes a weakened region 103, the weakened region 103 includes a plurality of modified portions 13, and the first glass sheet 11 and/or the second glass sheet 12 are formed with a plurality of the modified portions 13 arranged at intervals after a laser treatment. The modified portions 13 can be located at any surface of the first glass sheet 11, as shown in FIG. 2. Alternatively, the modified portions 13 can be located inside the first glass sheet 11, meaning that the modified portions 13 can be spaced from both the inner surface and the outer surface of the first glass sheet 11. Similarly, the modified portions 13 can be located at any surface of the second glass sheet 12, as shown in FIG. 4. Alternatively, the modified portions 13 can be located inside the second glass sheet 12, as shown in FIG. 3, meaning that the modified portions 13 can be spaced from both the inner surface and the outer surface of the second glass sheet 12.

It should be noted that the first glass sheet 11 faces an external environment of the vehicle, and the second glass sheet 12 faces an internal environment of the vehicle. Specifically, the first glass sheet 11 includes a first surface 111 and a second surface 112 disposed opposite to each other, and the second glass sheet 12 includes a third surface 121 and a fourth surface 122 disposed opposite to each other. The interlayer 20 is connected to the second surface 112 and the third surface 121. In the present embodiment, the first surface 111 is the outer surface of the first glass sheet 11 facing the outside of the vehicle, and the second surface 112 is the inner surface of the first glass sheet 11 facing the inside of the vehicle. The third surface 121 is the outer surface of the second glass sheet 12 facing the outside of the vehicle, and the fourth surface 122 is the inner surface of the second glass sheet 12 facing the inside of the vehicle.

In some embodiments, for example, the material of the interlayer 20 can be selected from polyvinyl butyral (PVB), poly urethane (PU), ethylene-vinyl acetate copolymer (EVA), or an SGP ionomer film.

In some embodiments, the glass sheet 10 includes one or more of soda-lime silicate and aluminosilicate.

Specifically, the first glass sheet 11 is formed with a plurality of first modified portions 131 arranged at intervals after a laser treatment, and/or the second glass sheet 12 is formed with a plurality of second modified portions 132 arranged at intervals after a laser treatment.

The first modified portions 131 can be obtained through a laser treatment simultaneously performed during forming the first glass sheet 11, or can be obtained through a laser treatment performed after forming the first glass sheet 11. Under the action of the laser treatment, the strength of the first modified portions 131 is weaker than the strength of portions of the first glass sheet 11 that are not subjected to the laser modification treatment. Similarly, the second modified portions 132 can be obtained through a laser treatment simultaneously performed during forming the second glass sheet 12, or can be obtained through a laser treatment performed after forming the second glass sheet 12. Under the action of the laser treatment, the strength of the second modified portions 132 is weaker than the strength of portions of the second glass sheet 12 are not been subjected to the laser modification treatment.

It should be noted that, the greater the number of the modified portions 13 on the first glass sheet 11 and/or the number of the modified portions 13 on the second glass sheet 12, the more the non-uniformity of the laminated glass 10, thereby reducing the strength of the vehicle window glass 1, lowering the HIC value, and thus improving safety. Conversely, when the number of the modified portions 13 on the first glass sheet 11 and/or the number of the modified portions 13 on the second glass sheet 12 decreases, the strength of the vehicle window glass 1 increases, the HIC value increases, and the safety performance decreases.

According to the vehicle window glass 1 described above, the first glass sheet 11 and/or the second glass sheet 12 are formed with a plurality of the modified portions 13 arranged at intervals after the laser treatment, creating non-uniformity in glass properties, which can reduce the strength of the vehicle window glass 1, and make the HIC value meet the requirement, thereby improving safety. In addition, the modified portions 13 cannot be directly observed, which ensures the product appearance of the vehicle window glass 1.

Referring to FIG. 2, FIG. 4 and FIG. 5, the modified portion 13 extends from the outer surface of the first glass sheet 11 toward the inner surface thereof, and/or the modified portion 13 extends from the outer surface of the second glass sheet 12 toward the inner surface thereof. In a thickness direction of the laminated glass 10, a depth of the modified portion 13 is set as H1, and a thickness of the first glass sheet 11 or the second glass sheet 12 is set as H2, where 0.2H2 ≤ H1 < H2. Preferably, 0.5H2 ≤ H1 < H2. The greater the depth H1 to which the modified portions 13 extend from the outer surface of the first glass sheet 11 and/or the second glass sheet 12 toward the inner surface thereof, the lower the strength of the vehicle window glass 1, the more obvious the cushioning effect during collision with a pedestrian, and the more the HIC value decreases. Conversely, the less the depth H1 to which the modified portions 13 extend from the outer surface of the first glass sheet 11 and/or the second glass sheet 12 toward the inner surface thereof, the greater the strength of the vehicle window glass 1, the less obvious the cushioning effect during collision with a pedestrian, and the more the HIC value increases. In the present embodiment, 0.2H2 ≤ H1 < H2, so that the depth H1 is relatively suitable, enabling a relatively small HIC value of the vehicle window glass 1, thereby improving safety performance.

In some embodiments, H1 can be but is not limited to 0.2H2, 0.3H2, 0.4H2, 0.5H2, 0.6H2, 0.7H2, 0.8H2, 0.9H2, 0.92H2, 0.95H2, 0.97H2, or 0.99H2, etc., which can be specifically and flexibly adjusted and set according to actual requirements.

In some alternative embodiments, H1 can also be set to any value less than 0.2H2 according to actual requirements. When H1 is set relatively small, the number of the modified portions 13 is increased to correspondingly reduce the strength of the laminated glass sheet 10, so that the HIC value decreases and meets the requirements.

Referring to FIG. 2 again, in some embodiments, a plurality of modified portions 13 arranged at intervals are formed at the outer surfaces of both the first glass sheet 11 and the second glass sheet 12. That is to say, a plurality of modified portions 13 arranged at intervals are formed at both the first surface 111 of the first glass sheet 11 and the third surface 121 of the second glass sheet 12. In this way, the HIC value can be reduced by controlling and adjusting the number and depth of the modified portions 13, so as to meet safety requirements. In addition, compared to the approach that the modified portions 13 are formed at both the first surface 111 and the second surface 112 of the first glass sheet 11, and at both the third surface 121 and the fourth surface 122 of the second glass sheet 12, the approach that the modified portions 13 are formed only at the first surface 111 of the first glass sheet 11 and the third surface 121 of the second glass sheet 12 can improve processing convenience of the laminated glass 10, thereby improving the production efficiency.

If the modified portions 13 are formed at the first surface 111 of the first glass sheet 11, as the outer surface of the first glass sheet 11 is in direct contact with the external environment, this approach may lead to breakage defects, which may affect the service life of the laminated glass 10. Therefore, referring to FIG. 4 again, preferably, the modified portions 13 are formed only at the third surface 121 of the second glass sheet 12. In this way, only the second glass sheet 12 is subjected to modification treatment to reduce the strength thereof, and after it is combined with another glass sheet that is not subjected to the modification treatment, the overall strength of the obtained vehicle window glass 1 is correspondingly reduced, which similarly enables the HIC value to meet the requirement, thereby improving safety.

In some embodiments, the modified portions 13 are located inside the first glass sheet 11 and/or located inside the second glass sheet 12. In this way, on the one hand, the modified portions 13 can be prevented from being in direct contact with the external environment and leading to breakage defects, thereby relatively extending the service life of the laminated glass 10. On the other hand, the modified portions 13 are located in a tensile stress layer, which facilitates crack propagation when a pedestrian collision occurs, thereby reducing glass strength. In addition, a distance between the modified portion inside the first glass sheet 11 and the outer surface of the first glass sheet 11 or a distance between the modified portion inside the second glass sheet 12 and the outer surface of the second glass sheet 12 is set as H3, and the thickness of the first glass sheet 11 or the second glass sheet 12 is set as H2, where 0.2H2 ≤ H3 < 0.5H2. In this way, the distance H3 is relatively suitable, enabling a relatively small HIC value of the vehicle window glass 1, thereby improving safety performance.

In some embodiments, H3 can be but is not limited to 0.2H2, 0.3H2, 0.4H2, or 0.5H2, etc., which can be specifically and flexibly adjusted and set according to actual requirements.

Referring to FIG. 3, preferably, the modified portions 13 are formed only inside the second glass sheet 12. In this way, only the second glass sheet 12 is subjected to modification treatment to reduce the strength thereof, and after it is combined with another glass sheet that is not subjected to modification treatment, the overall strength of the obtained vehicle window glass 1 is correspondingly reduced, which similarly enables the HIC value to meet the requirements, thereby improving safety. Since the second glass sheet 12 correspondingly serves as an inner glass sheet, and the modified portions 13 are located inside the second glass sheet 12, on the one hand, the modified portions 13 can be prevented from being in direct contact with the external environment and leading to breakage defects, thereby relatively extending the service life of the laminated glass 10; on the other hand, the modified portions 13 are located in the tensile stress layer, which facilitates crack propagation when a pedestrian collision occurs, thereby reducing glass strength.

Referring to FIG. 2, in some embodiments, the first glass sheet 11 and the second glass sheet 12 both include a plurality of modified portions 13 arranged at intervals. In a thickness direction of the laminated glass 10, the modified portions 13 formed on the first glass sheet 11 and the modified portions 13 formed on the second glass sheet 12 are offset from each other. Specifically, a plurality of first modified portions 131 are formed at the first surface 111 of the first glass sheet 11, and a plurality of second modified portions 132 are formed at the third surface 121 of the second glass sheet 12, and in the thickness direction X of the laminated glass 10, the first modified portions 131 and the second modified portions 132 are offset from each other. In this way, the HIC value is made to be small enough, thereby meeting safety requirements. In addition, a plane perpendicular to the direction X is selected as a reference plane, and orthographic projections of the respective modified portions 13 of the vehicle window glass 1 on the reference plane are equally spaced. In this way, the strengths of respective portions of the vehicle window glass 1 are relatively uniform, which can further improve safety.

In some embodiments, the first glass sheet 11 and the second glass sheet 12 both include a plurality of modified portions 13 arranged at intervals. In a thickness direction X of the laminated glass 10, the modified portions 13 of the first glass sheet 11 and the modified portions 13 of the second glass sheet 12 overlap with each other. Specifically, a plurality of first modified portions 131 are formed at the first surface 111 of the first glass sheet 11, and a plurality of second modified portions 132 are formed at the third surface 121 of the second glass sheet 12, and in the thickness direction X of the laminated glass 10, the first modified portions 131 and the second modified portions 132 overlap with each other. In this way, the HIC can also be made sufficiently small, thereby meeting safety requirements. In addition, a plane perpendicular to the direction X is selected as a reference plane, and orthographic projections of the respective modified portions 13 of the vehicle window glass 1 on the reference plane are equally spaced. In this way, the strengths of respective portions of the vehicle window glass 1 is relatively uniform, which can further improve safety.

In some embodiments, the first glass sheet 11 and the second glass sheet 12 both include a plurality of modified portions 13 arranged at intervals. Specifically, the first glass sheet 11 is set as an outer glass sheet, and the modified portions 13 of the first glass sheet 11 are located inside the first glass sheet 11. In this way, since the first glass sheet 11 is set as an outer glass sheet and the outer surface of the first glass sheet 11 is directly exposed, when the modified portions 13 of the first glass sheet 11 are formed inside the first glass sheet 11, on the one hand, the modified portion 13 can be prevented from being in direct contact with the external environment and leading to breakage defects, thereby relatively extending a service life of the first glass sheet 11, and on the other hand, the modified portions 13 are located in the tensile stress layer, which facilitates crack propagation when a pedestrian collision occurs, thereby reducing glass strength. In addition, the second glass sheet 12 correspondingly serves as an inner glass sheet, and the modified portions 13 of the second glass sheet 12 are specifically, for example, located at the outer surface of the second glass sheet 12, which can also reduce glass strength.

In some embodiments, a plurality of modified portions 13 arranged at intervals are formed at both the inner surface of the first glass sheet 11 and/or the inner surface of the second glass sheet 12 after a laser treatment. That is to say, a plurality of first modified portions 131 are not limited to be formed at the first surface 111, as described in the above embodiments, but can also be formed at the second surface 112. Similarly, a plurality of second modified portions 132 are not limited to be formed at the third surface 121, as described in the above embodiments, but can also be formed at the fourth surface 122. Specifically, referring to FIG. 2, the first modified portions 131 are formed at both the first surface 111 and the second surface 112 of the first glass sheet 11, and/or the second modified portions 132 are formed at both the third surface 121 and the fourth surface 122 of the second glass sheet 12.

In some embodiments, a plurality of modified portions 13 arranged at intervals are formed at both the outer surface and the inner surface of the first glass sheet 11, and in a thickness direction of the first glass sheet 11, the modified portions 13 at the outer surface of the first glass sheet 11 and the modified portions 13 at the inner surface of the first glass sheet 11 are offset from each other. And/or, a plurality of modified portions 13 arranged at intervals are formed at both the outer surface and the inner surface of the second glass sheet 12, and in a thickness direction of the second glass sheet 12, the modified portions 13 at the outer surface of the second glass sheet 12 and the modified portions 13 at the inner surface of the second glass sheet 12 are offset from each other. Specifically, the first modified portions 131 at the first surface 111 of the first glass sheet 11 and the first modified portions 131 at the second surface 112 of the first glass sheet 11 are offset from each other in a direction perpendicular to a thickness direction X of the laminated glass 10, and/or the second modified portions 132 at the third surface 121 of the second glass sheet 12 and the second modified portions 132 at the fourth surface 122 of the second glass sheet 12 are offset from each other in a direction perpendicular to the thickness direction X of the laminated glass 10. In this way, the strengths of respective portions of the first glass sheet 11 and/or the second glass sheet 12 can be relatively uniform, which can further improve safety, and can prevent a through-failure defect of the laminated glass 10 caused by the modified portions 13 at the outer surface and the inner surface of the first glass sheet 11 and/or the second glass sheet being aligned with each other along a direction perpendicular to the thickness direction X of the laminated glass 10.

Referring to FIG. 1, in some embodiments, in a width direction of the laminated glass 10, a distance D between two farthest points of a pattern outline formed by the modified portion 13 on the outer surface of the first glass sheet 11 and/or the outer surface of the second glass sheet 12 is set as D, where D ≤ 0.5 mm. Specifically, D can be but is not limited to 0.5 mm, 0.4 mm, 0.3 mm, 0.2 mm, or 0.1 mm. In this way, the pattern outline formed by the modified portion 13 on the laminated glass 10 is sufficiently small, making it unobservable, thereby improving the appearance performance of the vehicle window glass 1.

It should be noted that the pattern outline can be but is not limited to regular shapes such as a circle, an ellipse, a polygon, or other irregular shapes. Wherein, the polygon can be a triangle, a quadrilateral, a pentagon, etc. In the present embodiment, the pattern outline is specifically a circle, and the distance D between the two farthest points of the pattern outline is the diameter.

In some embodiments, D can also be set to any value greater than 0.5 mm and less than or equal to 3 mm according to actual requirements.

In some embodiments, D can also be set to be greater than 3 mm according to actual requirements.

Referring to FIG. 1, in some embodiments, the respective modified portions 13 are arranged in an array in a light-transmitting region 101 of the vehicle window glass 1, and more specifically in a weakened region 103 inside the light-transmitting region 101. A size and shape of the weakened region 103 can be flexibly adjusted and set according to actual requirements, as long as it can meet needs of users. When the weakened region 103 includes a plurality of modified portions 13 arranged in an array, the strengths of respective portions of the weakened region 103 can be made lower than other positions of the light-transmitting region 101, that is, the HIC value of the weakened region 103 meets the requirement, providing a cushioning effect during an impact and having relatively high safety.

Research has found that, when a distance d between two adjacent modified portions 13 is less than 20 mm, they are easily observed and affect the appearance performance of the vehicle window glass 1. When the distance d between two adjacent modified portions 13 is greater than 300 mm, the strength of the vehicle window glass 1 cannot be effectively reduced.

In some embodiments, the distance d between two adjacent modified portions 13 is in a range from 20 mm to 300 mm. Specifically, the distance d is, for example, 20 mm, 50 mm, 100 mm, 150 mm, 200 mm, 250 mm, or 300 mm, etc. In this way, on the one hand, the distance d between two adjacent modified portions 13 is sufficiently large, making the modified portions 13 less likely to be observed and not affecting the appearance performance of the vehicle window glass 1; on the other hand, the distance d between two adjacent modified portions 13 is not excessively large, that is, the modified portions 13 are set sufficiently densely, thereby effectively reducing the strength of the vehicle window glass 1 and making the HIC value meet the requirement.

In some embodiments, the distance d is flexibly adjusted and set to any value less than 20 mm and greater than 300 mm according to actual requirements.

In some embodiments, the vehicle window glass 1 includes a light-transmitting region 101 and a light-shielding region 102 arranged along a circumferential direction of the light-transmitting region 101. A visible light transmittance of the light-transmitting region 101 is greater than or equal to 70%, and a visible light transmittance of the light-shielding region 102 is less than or equal to 5%. Respective modified portions 13 are formed in the light-transmitting region 101. Herein, the light-transmitting region 101 is a see-through region, and a person inside the vehicle can observe the external environment of the vehicle through the light-transmitting region 101. Since the respective modified portions 13 are arranged in the light-transmitting region 101, the strength of the light-transmitting region 101 is reduced, that is, the HIC value of the light-transmitting region 101 meets the requirement, providing a cushioning effect during an impact and having relatively high safety. In addition, the light-shielding region 102, which is a black border region, plays roles of shielding, protection, and enhancing overall aesthetics. Since the modified portions 13 are not arranged in the light-shielding region 102, it is possible to avoid the appearance change of the light-shielding region 102 that would be caused if the modified portions 13 were arranged therein.

In some embodiments, a visible light transmittance of the light-shielding region 102 is less than or equal to 3%, more preferably less than or equal to 1%, and even equal to 0, that is, opaque. Specifically, the light-shielding region 102 includes but is not limited to a dark ink layer, the first surface 111 is set as a surface of the vehicle window glass facing the external environment of the vehicle, and the fourth surface 122 is set as a surface of the vehicle window glass facing the internal environment of the vehicle. A ceramic ink or a UV ink is printed on the second surface 112 through processes such as screen printing, inkjet printing, or the like, and after curing or high-temperature sintering, a dark ink layer is formed. The dark ink layer is circumferentially arranged in a peripheral edge area of the second surface 112. It can be understood that the dark ink layer can alternatively be located only on the third surface 121, or only on the fourth surface 122, or simultaneously on the second surface 112 and the fourth surface 122, or simultaneously on the second surface 112 and the third surface 121, or simultaneously on the third surface 121 and the fourth surface 122, or simultaneously on the second surface 112, the third surface 121, and the fourth surface 122.

A boundary between the light-shielding region 102 and the light-transmitting region 101, that is, an inner edge of the light-shielding region 102, or an outline of the light-transmitting region 101, has a surface stress different from surface stresses of other positions in the light-shielding region 102 and other positions in the light-transmitting region 101. In addition, the boundary between the light-shielding region 102 and the light-transmitting region 101 is a weakened region with a relatively low strength.

In some embodiments, the light-transmitting region 101 includes a weakened region 103, and respective modified portions 13 are located within the weakened region 103. Specifically, a distance S between an outline of the weakened region 103 and an inner edge of the light-shielding region 102 is in a range from 30 mm to 200 mm. The distance S can be but is not limited to 30 mm, 40 mm, 50 mm, 60 mm, 70 mm, 80 mm, 90 mm, 100 mm, 110 mm, 120 mm, 130 mm, 140 mm, 150 mm, 160 mm, 170 mm, 180 mm, 190 mm, or 200 mm, etc. In this way, the value of the distance S is relatively reasonable. On the one hand, the distance S is sufficiently large, so that the weakened region 103 is as far away as possible from the outline of the light-shielding region 102, avoiding overlapping with the weakened region at the outline position of the light-shielding region 102 that may cause chip-off defects; on the other hand, the distance S is not excessively large, that is, the weakened region 103 almost covers the entire light-transmitting region 101, which reduces the strengths of more parts of the light-transmitting region 101, thereby improving safety.

Of course, in some alternative embodiments, the distance S can also be flexibly adjusted and set to any value less than 30 mm and greater than 200 mm according to actual requirements.

In some embodiments, the head injury criterion (HIC) value of the vehicle window glass 1 is less than 650. Preferably, the head injury criterion (HIC) value of the vehicle window glass 1 is less than or equal to 500. More preferably, the head injury criterion (HIC) value of the vehicle window glass 1 is less than or equal to 300. Even more preferably, the head injury criterion (HIC) value of the vehicle window glass 1 is in a range from 150 to 300. In this way, the vehicle window glass 1 has good energy absorption and cushioning capability when subjected to high-speed impact by blunt objects, reducing injuries to people caused by severe collisions, and can provide a protective effect for pedestrians.

In some embodiments, the head injury criterion (HIC) value of the vehicle window glass 1 includes but is not limited to 120, 150, 160, 170, 180, 190, 200, 210, 220, 230, 260, 270, 280, 290, 300, 310, 320, 330, 340, 350, 360, 370, 380, 390, 400, 420, 450, 470, 500, 520, 550, 570, or 600, etc., which is specifically and flexibly adjusted and set according to actual requirements.

Referring to FIG. 2 to FIG. 7, in some embodiments, a method for manufacturing the vehicle window glass 1 of any of the above embodiments includes the following steps.

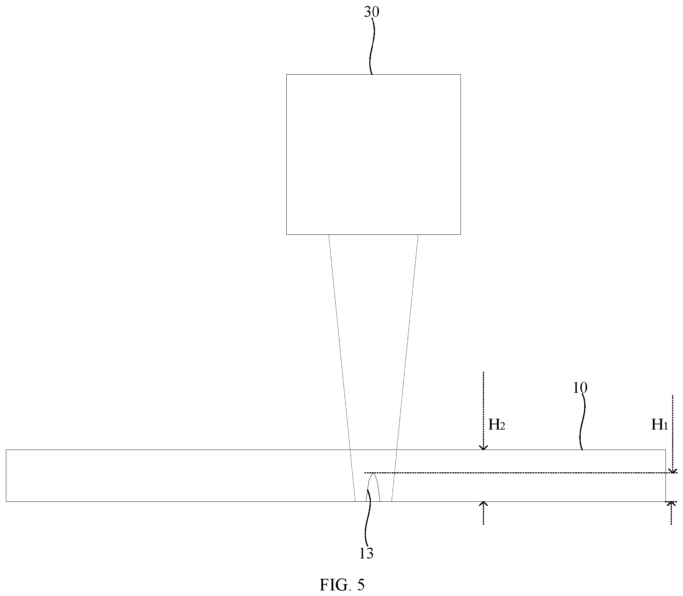

Step 1: referring to FIG. 2 to FIG. 5, focusing a laser on the first glass sheet 11 and/or the second glass sheet 12 to perform a modification treatment on the first glass sheet 11 and/or the second glass sheet 12 to obtain a plurality of modified portions 13. Specifically, the modified portions 13 can be formed at any surface of the first glass sheet 11 (as shown in FIG. 2 and FIG. 5), or the modified portions 13 can be located inside the first glass sheet 11, that is, the modified portions 13 are spaced from both the inner surface and the outer surface of the first glass sheet 11. Similarly, the modified portions 13 can be located at any surface of the second glass sheet 12 (as shown in FIG. 2 and FIG. 5), or the modified portions 13 can be located inside the second glass sheet 12 (as shown in FIG. 3), that is, the modified portions 13 are spaced from both the inner surface and the outer surface of the second glass sheet 12.

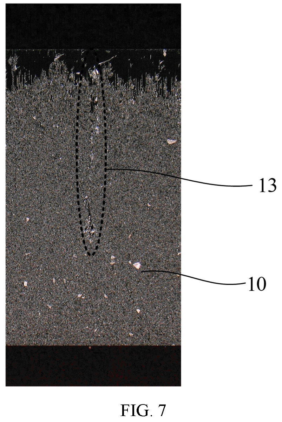

In addition, referring to FIG. 7, FIG. 7 illustrates a schematic structural view under a microscope of a cross section of a modified laminated glass 10 after cutting according to an embodiment of the present application.

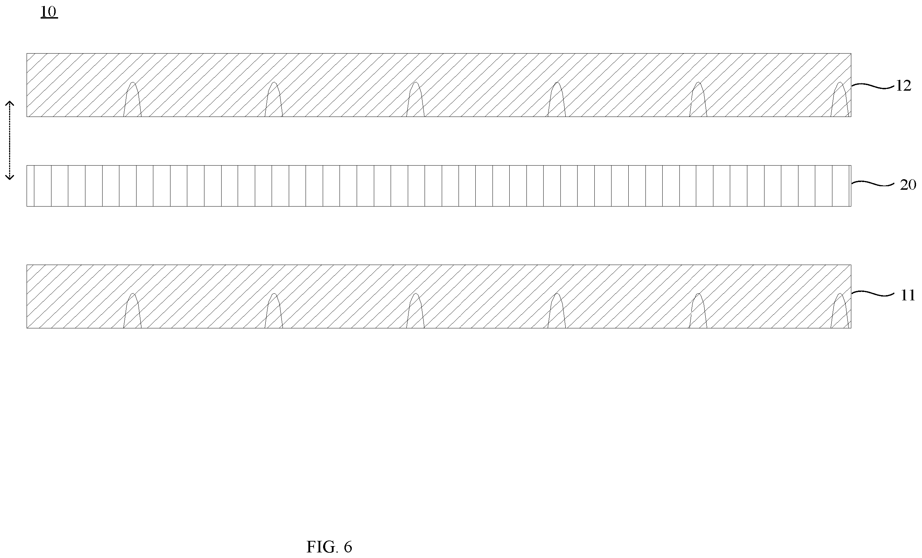

Step 2: referring to FIG. 6, performing a laminating treatment on the first glass sheet 11, the second glass sheet 12, and the interlayer 20, wherein the first glass sheet 11 and/or the second glass sheet 12 are subjected to the modification treatment through Step 1.

According to the above-described manufacturing method of the vehicle window glass 1, the first glass sheet 11 and/or the second glass sheet 12 are formed with a plurality of the modified portions 13 arranged at intervals after a laser treatment, creating non-uniformity in the glass properties, which can reduce the strength of the vehicle window glass 1, and make the HIC value meet the requirement, thereby improving safety. In addition, the modified portions 13 cannot be directly observed, which ensures the product appearance of the vehicle window glass 1.

In some embodiments, Step 1 includes: placing the first glass sheet 11 and/or the second glass sheet 12 to be modified on a platform, with a laser device 30 located above the first glass sheet 11 and/or the second glass sheet 12, and focusing the laser emitted by the laser device 30 on the first glass sheet 11 and/or the second glass sheet 12 by using a galvanometer scanner and a field lens to form a plurality of the modified portions 13 in the first glass sheet 11 and/or the second glass sheet 12.

By adjusting a focus position of the laser device 30, positions of the modified portions 13 on the first glass sheet 11 and/or the second glass sheet 12 can be adjusted, so that the modified portions 13 can be formed at any surface of the first glass sheet 11, or the modified portions 13 can be located inside the first glass sheet 11, that is, the modified portions 13 are spaced from both the inner surface and the outer surface of the first glass sheet 11. Similarly, the modified portions 13 can be formed at any surface of the second glass sheet 12, or the modified portions 13 can be located inside the second glass sheet 12, that is, the modified portions 13 are spaced from both the inner surface and the outer surface of the second glass sheet 12.

Specifically, the third surface 121 of the second glass sheet 12 is made to face downward, that is, facing the platform, and the fourth surface 122 of the second glass sheet 12 is made to face upward, that is, away from the platform. Specifically, a plurality of the modified portions 13 are formed on a side of the second glass sheet 12 away from the laser device 30, that is, formed at the third surface 121. Compared with a manner of forming a plurality of the modified portions 13 on a side of the second glass sheet 12 facing the laser device 30, this approach can avoid forming large pits on the side of the second glass sheet 12 facing the laser device 30; that is, the processing quality of the second glass sheet 12 is higher, the operational requirements for the equipment are lower, and it is more conducive to mass production.

In some embodiments, the laser can be an infrared light with a specific wavelength of 1064 nm at a picosecond or nanosecond level; or the laser can be a green light with a specific wavelength of 532 nm at a picosecond or nanosecond level; or the laser can also be other forms, which are not limited herein.

Referring to FIG. 1, in one embodiment, a vehicle includes the vehicle window glass of any of the above embodiments.

According to the above-mentioned vehicle, the first glass sheet 11 and/or the second glass sheet 12 are formed with a plurality of the modified portions 13 arranged at intervals after a laser treatment, creating non-uniformity in the glass properties, which can reduce the strength of the vehicle window glass 1, make the HIC value meet requirements, thereby improving safety. In addition, the modified portions 13 cannot be directly observed, which ensures the product appearance of the vehicle window glass 1.

When the vehicle window glass 1 is installed on a vehicle, it preferably serves as a front windshield of the vehicle, but it is not limited thereto. The vehicle window glass 1 can also serve as a rear windshield or a side window glass, thereby providing more application scenarios for the vehicle. For example, the vehicle window glass 1 can serve as a side window glass for use in emergency escape.

The vehicle in the present application can be, but is not limited to, a sedan, a multi-purpose vehicle (MPV), a sport/suburban utility vehicle (SUV), an off-road vehicle (ORV), a pickup truck, a van, a passenger car, or a truck, etc.

In the present application, unless otherwise clearly specified and defined, the terms "installed", "connected", "coupled", "fixed" and the like should be understood broadly. For example, an element, when being referred to as being "installed", "connected", "coupled", or "fixed" to another element, unless otherwise specifically defined, may be fixedly connected, detachably connected, or integrated to the other element, may be mechanical connected or electrically connected to the other element, and may be directly connected to the other element or connected to the other element via an intermediate medium, or may be the internal communication of two elements or the interaction relationship between them. For those skilled in the art, the specific meanings of the above terms in the present application can be understood according to specific circumstances.

The technical features of the above-mentioned embodiments can be combined arbitrarily. In order to make the description concise, not all possible combinations of the technical features are described in the embodiments. However, as long as there is no contradiction in the combination of these technical features, the combinations should be considered as in the scope of the present application.

The above-described embodiments are only several implementations of the present application, and the descriptions are relatively specific and detailed, but they should not be construed as limiting the scope of the present application. It should be understood by those of ordinary skill in the art that various modifications and improvements can be made without departing from the concept of the present application, and all fall within the protection scope of the present application. Therefore, the patent protection of the present application shall be defined by the appended claims.

## Claims

1. A vehicle window glass, comprising a laminated glass, wherein in a direction from an outside of a vehicle to an inside of the vehicle, the laminated glass sequentially comprises a first glass sheet, an interlayer, and a second glass sheet, the interlayer is connected between the first glass sheet and the second glass sheet, and the first glass sheet and the second glass sheet each have an outer surface facing the outside of the vehicle and an inner surface opposite to the outer surface;
the laminated glass comprises a weakened region, the weakened region comprises a plurality of modified portions, and the first glass sheet and/or the second glass sheet are formed with a plurality of the modified portions arranged at intervals after a laser treatment.

2. The vehicle window glass according to claim 1, wherein the first glass sheet comprises a first surface and a second surface disposed opposite to each other, the second glass sheet comprises a third surface and a fourth surface disposed opposite to each other, and the interlayer is connected to the second surface and the third surface, the first surface is the outer surface of the first glass sheet facing the outside of the vehicle, the second surface is the inner surface of the first glass sheet facing the inside of the vehicle, the third surface is the outer surface of the second glass sheet facing the outside of the vehicle, and the fourth surface is the inner surface of the second glass sheet facing the inside of the vehicle;
the modified portion extends from the first surface of the first glass sheet toward the second surface of the first glass sheet, and/or
the modified portion extends from the third surface of the second glass sheet toward the fourth surface of the second glass sheet.

3. The vehicle window glass according to claim 1 or 2, wherein in a thickness direction of the laminated glass, a depth of the modified portion is set as H1, and a thickness of the first glass sheet or the second glass sheet is set as H2, where 0.2H2 ≤ H1 < H2.

4. The vehicle window glass according to any one of claims 1 to 3, wherein the modified portions are located at the first surface of the first glass sheet, and/or
the modified portions are located at the third surface of the second glass sheet.

5. The vehicle window glass according to any one of claims 1 to 4, wherein the modified portions are located inside the first glass sheet and/or the second glass sheet;
a distance between the modified portion inside the first glass sheet and the outer surface of the first glass sheet or a distance between the modified portion inside the second glass sheet and the outer surface of the second glass sheet is set as H3, and a thickness of the first glass sheet or the second glass sheet is set as H2, where 0.2H2 ≤ H3 < 0.5H2.

6. The vehicle window glass according to any one of claims 1 to 5, wherein in a width direction of the laminated glass, a distance between two farthest points of a pattern outline formed by the modified portion on the outer surface of the first glass sheet and/or the outer surface of the second glass sheet is set as D, where D ≤ 0.5 mm.

7. The vehicle window glass according to any one of claims 1 to 6, wherein in a width direction of the laminated glass, a distance between two modified portions adjacent to each other on the outer surface of the first glass sheet and/or the outer surface of the second glass sheet is set as d, where 20 mm ≤ d ≤ 300 mm.

8. The vehicle window glass according to any one of claims 1 to 7, wherein the first glass sheet and the second glass sheet both comprise a plurality of the modified portions arranged at intervals, and the modified portions of the first glass sheet and the modified portions of the second glass sheet are offset from each other in a thickness direction of the laminated glass.

9. The vehicle window glass according to any one of claims 1 to 8, wherein the first glass sheet and the second glass sheet both comprise a plurality of the modified portions arranged at intervals, and the modified portions of the first glass sheet and the modified portions of the second glass sheet overlap with each other in a thickness direction of the laminated glass.

10. The vehicle window glass according to any one of claims 1 to 9, wherein the first glass sheet and the second glass sheet both comprise a plurality of the modified portions arranged at intervals; the modified portions of the first glass sheet are located inside the first glass sheet, and the modified portions of the second glass sheet are located at the outer surface of the second glass sheet.

11. The vehicle window glass according to any one of claims 1 to 10, wherein the modified portions are formed only at the third surface of the second glass sheet, or
the modified portions are formed only inside the second glass sheet.

12. The vehicle window glass according to any one of claims 1 to 11, wherein the vehicle window glass comprises a light-transmitting region and a light-shielding region arranged along a circumferential direction of the light-transmitting region, a visible light transmittance of the light-transmitting region is greater than or equal to 70%, and a visible light transmittance of the light-shielding region is less than or equal to 5%; and the light-transmitting region comprises the weakened region.

13. The vehicle window glass according to claim 12, wherein a distance between an outline of the light-shielding region and an outline of the weakened region is set as S, where 30 mm ≤ S ≤ 200 mm.

14. The vehicle window glass according to any one of claims 1 to 13, wherein a head injury criterion (HIC) value of the weakened region is less than 650.

15. The vehicle window glass according to any one of claims 1 to 14, wherein the head injury criterion (HIC) value of the weakened region is less than or equal to 300, or
the head injury criterion (HIC) value of the weakened region is in a range from 150 to 300.

16. The vehicle window glass according to any one of claims 1 to 15, wherein a plurality of the modified portions arranged at intervals are formed at both the inner surface of the first glass sheet and/or the inner surface of the second glass sheet after a laser treatment.

17. The vehicle window glass according to claim 16, wherein a plurality of the modified portions arranged at intervals are formed at both the outer surface and the inner surface of the first glass sheet, and the modified portions at the outer surface of the first glass sheet and the modified portions at the inner surface of the first glass sheet are offset from each other in a thickness direction of the first glass sheet; and/or
a plurality of the modified portions arranged at intervals are formed at both the outer surface and the inner surface of the second glass sheet, and the modified portions at the outer surface of the second glass sheet and the modified portions at the inner surface of the second glass sheet are offset from each other in a thickness direction of the second glass sheet.

18. A method for manufacturing the vehicle window glass according to any one of claims 1 to 17, comprising the following steps:
step 1, focusing a laser on the first glass sheet and/or the second glass sheet to perform a modification treatment on the first glass sheet and/or the second glass sheet to obtain a plurality of modified portions; and
step 2, performing a laminating treatment on the first glass sheet, the second glass sheet, and the interlayer.

19. The method for manufacturing the vehicle window glass according to claim 18, wherein step 1 comprises:
placing the first glass sheet and/or the second glass sheet to be modified on a platform, with a laser device located above the first glass sheet and/or the second glass sheet, and
focusing the laser emitted by the laser device on the first glass sheet and/or the second glass sheet by using a galvanometer scanner and a field lens to form a plurality of the modified portions in the first glass sheet and/or the second glass sheet.

20. A vehicle comprising the vehicle window glass according to any one of claims 1 to 17.
